(19) Europäisches Patentamt
European Patent Office
Office européen des brevets

(11) EP 4 336 698 A1

(12) EUROPEAN PATENT APPLICATION
published in accordance with Art. 153(4) EPC

(43) Date of publication:
13.03.2024 Bulletin 2024/11

(21) Application number: 21941121.2

(22) Date of filing: 10.05.2021

(51) International Patent Classification (IPC):
*H02J 7/00* (2006.01)

(52) Cooperative Patent Classification (CPC):
H02J 7/00

(86) International application number:
PCT/CN2021/092680

(87) International publication number:
WO 2022/236545 (17.11.2022 Gazette 2022/46)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Huawei Digital Power Technologies
Co., Ltd.
Shenzhen, Guangdong 518043 (CN)

(72) Inventors:
• ZHOU, He
  Shenzhen, Guangdong 518129 (CN)
• WANG, Zhigang
  Shenzhen, Guangdong 518129 (CN)
• WU, Zhipeng
  Shenzhen, Guangdong 518129 (CN)

(74) Representative: Huawei European IPR
Huawei Technologies Duesseldorf GmbH
Riesstraße 25
80992 München (DE)

(54) BATTERY SYSTEM AND CONTROL METHOD

(57) This application discloses a battery system and a control method, to provide voltages required by a plurality of loads, expand application scenarios, and ensure high scenario adaptability. A first busbar, at least one battery rack, and a control circuit are included. Each battery rack is connected to the first busbar, and the first busbar is connected to a load; the battery rack includes a plurality of battery units, and the plurality of battery units are connected in series; each battery unit includes a battery module, a connection switch K1, and an isolation switch K2; and the connection switch K1 is connected in series to the battery module to form a first branch, and the isolation switch K2 is connected in parallel to the first branch. The control circuit is connected to control ends of the connection switch K1 and the isolation switch K2, and is configured to: control, based on a first voltage required by the load, connection switches K1 and isolation switches K2 of N battery units in the battery rack, to enable battery modules in the N battery units to connect to the first busbar to supply power. An output voltage of the first busbar meets the first voltage required by the load.

FIG. 2

EP 4 336 698 A1

## Description

## TECHNICAL FIELD

This application relates to the field of electronic technologies, and in particular, to a battery system and a control method.

## BACKGROUND

Currently, a battery system is widely applied to scenarios such as a power generation side, a power grid side, a user side (such as industrial and commercial electricity consumption and residential electricity consumption), and a microgrid. Different scenarios require different direct current voltage levels. For example, a commercial power station on the power generation side requires the highest direct current voltage level, a direct current voltage level required in the industrial and commercial electricity consumption scenario is lower than the direct current voltage level required in the commercial power station, and the user side requires the lowest direct current voltage level. Currently, one battery system can provide a single direct current voltage level, and it is difficult to adapt to diversified direct current voltage levels required in different scenarios.

## SUMMARY

This application provides a battery system and a control method, to provide voltages required by a plurality of loads, expand application scenarios, and ensure high scenario adaptability.

According to a first aspect, this application provides a battery system, including a first busbar, at least one battery rack, and a control circuit. Each battery rack is connected to the first busbar, and the first busbar is connected to a load; the battery rack includes a plurality of battery units, and the plurality of battery units are connected in series; each battery unit includes a battery module, a connection switch K1, and an isolation switch K2; and the connection switch K1 is connected in series to the battery module to form a first branch, and the isolation switch K2 is connected in parallel to the first branch. The control circuit is connected to control ends of the connection switch K1 and the isolation switch K2, and is configured to: control, based on a first voltage required by the load, connection switches K1 and isolation switches K2 of N battery units in the battery rack, to enable battery modules in the N battery units to connect to the first busbar to supply power. An output voltage of the first busbar meets the first voltage required by the load.

In this embodiment of this application, the control circuit is connected to the control ends of the connection switch K1 and the isolation switch K2 in each battery unit, so that each connection switch K1 and each isolation switch K2 can be controlled to be in an on or off state. The control circuit may control the connection switch K1 and the isolation switch K2 in each battery unit, so that the battery module in the battery unit is connected to the first busbar. The control circuit may control, based on the first voltage required by the load, the battery modules in the N battery units in the battery rack to connect to the first busbar to supply power, so that the output voltage of the first busbar can be adjusted to meet a voltage required by the load. The control circuit adjusts the first busbar to output a voltage to the load more flexibly. The battery system may be applied to scenarios in which different voltages are required, and this can expand application scenarios and ensure high scenario adaptability.

In a possible design, the control circuit is further configured to determine, based on the first voltage and a correspondence between a voltage required by the load and a quantity of battery units, that a quantity of battery units corresponding to the first voltage is N. The correspondence includes a plurality of voltages required by the load.

In this embodiment of this application, when the voltages required by the load are different, the control circuit may determine, based on the correspondence between the voltage and the quantity of battery units, a quantity of battery units corresponding to the voltage required by the load. The control circuit may control the connection switches K1 and the isolation switches K2 in the quantity of battery units in the battery rack, so that the quantity of battery modules connect to the first busbar to supply power, to adjust the output voltage of the first busbar. A manner in which the control circuit adjusts the output voltage of the first busbar to meet the voltage required by the load is relatively flexible.

In a possible design, the battery system further includes at least one battery module management circuit, and the battery module management circuit is separately connected to the battery rack and the control circuit. The battery module management circuit is configured to: collect a voltage and a current of each battery unit in the connected battery rack, and determine a state of health SOH parameter of each battery module based on the collected voltage and the collected current, to enable the control circuit to select the N battery units from the battery rack based on the SOH parameter of each battery module.

In this embodiment of this application, the battery system may include the battery module management circuit, configured to collect a voltage and a current of each battery module, to determine the SOH parameter of each battery module, so that the control circuit can select, based on the SOH parameter of each battery module from the battery rack, a battery module to connect to the first busbar.

In a possible implementation, the control circuit is further configured to: determine, based on an SOH parameter range corresponding to each of a plurality of preset state types and the SOH parameter of the battery module, a state type of a battery unit to which the battery module belongs; and select the N battery units from the battery rack based on a state type of each battery unit in the battery rack, to enable an SOH of each battery module in the battery rack to be balanced.

In this embodiment of this application, in a process of adjusting an output voltage of the battery rack, the control circuit may select, based on the state type of an SOH of each battery unit, N battery units from all the battery units included in the battery rack, and control a battery module in the selected battery unit to connect to the first busbar, to adjust the output voltage of the first busbar, thereby considering the SOH of each battery module and improving use efficiency of each battery module.

In a possible design, the battery module management circuit is specifically configured to: periodically collect the voltage and the current of each battery unit in the connected battery rack, determine the SOH parameter of each battery module based on the collected voltage and the collected current, and provide the SOH parameter of the battery module to the control circuit. The control circuit is further configured to: update, based on a last received SOH parameter of the battery module, the state type of the battery unit to which the battery module belongs.

In this embodiment of this application, the battery module management circuit may periodically determine the SOH of each battery module, to dynamically detect the SOH of each battery module, so that the control circuit can dynamically update the state type of each battery unit, and determine, based on an updated state type of each battery unit, the battery module that adjusts the output voltage of the first busbar and is connected to the first busbar.

In a possible design, the plurality of state types include a first state type and a second state type, and an SOH parameter range corresponding to the first state type does not overlap an SOH parameter range corresponding to the second state type. In this embodiment of this application, the SOH parameter ranges respectively corresponding to the first state type and the second state type do not overlap, to enable an SOH state type of one battery module to be one of the first state type and the second state type, so that the control circuit manages each battery module.

In a possible design, the battery module management circuit is separately connected to the control end of the connection switch K1 and the control end of the isolation switch K2 in each battery unit in the connected battery rack. The battery module management circuit is further configured to: detect whether a battery module in each battery unit in the connected battery rack is faulty; and when detecting that a battery module in a first battery unit is faulty, control a connection switch K1 and an isolation switch K2 in the first battery unit, to enable the battery module in the first battery unit to be disconnected from a battery module in another battery unit.

In this embodiment of this application, the battery module management circuit may detect whether the battery module in the connected battery rack is faulty. When the battery module is faulty, the battery module management circuit may control a connection switch K1 and an isolation switch K2 in a battery unit to which the faulty battery module belongs. For example, the connection switch K1 is controlled to be in an off state, and the isolation switch K2 is controlled to be in an on state, so that the faulty battery module is isolated from the battery rack without affecting running of another battery module in the battery rack, thereby improving availability of the battery system.

In a possible design, the battery module management circuit is further configured to: detect whether a battery module in each battery unit in the connected battery rack is faulty; and after detecting that a battery module in a first battery unit is faulty, provide fault indication information comprising an identifier of the first battery unit for the control circuit, to enable the control circuit to control the battery module in the second battery unit to be disconnected from a battery module in another battery unit.

In this embodiment of this application, the battery module management circuit may detect whether the battery module in the connected battery rack is faulty. When it is determined that the battery module is faulty, information of the battery unit to which the faulty battery module belongs is provided for the control circuit, so that the control circuit controls a connection switch K1 and an isolation switch K2 in the battery unit, so that the faulty battery module is isolated from the battery rack. For example, when a battery module fault is relatively serious, the battery module management circuit may isolate the faulty battery pack from the battery rack in a timely manner.

In a possible design, the control circuit is further configured to: control, based on an identifier of a third battery unit in received fault indication information, a connection switch K1 and an isolation switch K2 in the third battery unit corresponding to the identifier of the third battery unit, to enable a battery module in the third battery unit to be disconnected from the battery module in the another battery unit.

In this embodiment of this application, the control circuit may learn, based on the received fault indication information, information of the battery unit to which the faulty battery module belongs, and the control circuit may adjust the connection switch K1 and the isolation switch K2 in the battery unit to which the faulty battery module belongs. For example, the connection switch K1 is controlled to be in an off state, and the isolation switch K2 is controlled to be in an on state, so that the faulty battery module is isolated from the battery rack without affecting running of another battery module in the battery rack, thereby improving availability of the battery system.

In a possible design, the battery system further comprises at least one high voltage switch. The at least one battery rack is in a one-to-one correspondence with the at least one high voltage switch, and the control circuit is connected to a control end of the high voltage switch. The battery rack is connected to a corresponding high voltage switch, and the battery rack is connected to the first busbar when the corresponding high voltage switch is in an on state, or the battery rack is disconnected from the first busbar when the corresponding high voltage switch is in an off state.

In this embodiment of this application, the control circuit may control a high voltage switch connected to the battery rack to be in an on state, so that the battery rack is connected to the first busbar, and the battery rack may be discharged or charged through the first busbar. The control circuit may alternatively control the high voltage switch connected to the battery rack to be in an off state, so that the battery rack is disconnected from the first busbar.

In a possible design, the battery system further comprises at least one direct current/direct current conversion circuit. The at least one direct current/direct current conversion circuit is in a one-to-one correspondence with the at least one battery rack. The battery rack is connected to a first side of a corresponding direct current/direct current conversion circuit, and another side of the corresponding direct current/direct current conversion circuit is connected to the first busbar. The direct current/direct current conversion circuit is configured to: modulate an output voltage of the battery rack, and transmit a modulated voltage to the first busbar.

In this embodiment of this application, the direct current/direct current conversion circuit included in the battery system may modulate the voltage output by the battery rack, and transmit the modulated voltage to the first busbar, to supply power to the load connected to the first busbar.

In a possible design, the direct current/direct current conversion circuit is further configured to modulate a voltage at the first busbar to a charging voltage to charge the connected battery rack. In this embodiment of this application, the first busbar in the battery system is connected to an external power supply. Each battery rack is configured to store electric energy. The direct current/direct current conversion circuit may modulate the voltage at the first busbar into the charging voltage, to charge the battery rack connected to the direct current/direct current conversion circuit. It can be learned that the battery system may be applied to not only a power supply scenario, but also a backup power scenario.

In a possible design, the battery system further includes at least one high voltage switch. The at least one battery rack is in a one-to-one correspondence with the at least one high voltage switch, and the control circuit is connected to a control end of the high voltage switch. The battery rack, the high voltage switch corresponding to the battery rack, and the direct current/direct current conversion circuit corresponding to the battery rack are sequentially connected in series, and the battery rack is connected to the corresponding direct current/direct current conversion circuit when the corresponding high voltage switch is in an on state, or the battery rack is disconnected from the corresponding direct current/direct current conversion circuit when the corresponding high voltage switch is in an off state.

In this embodiment of this application, the control circuit may control the high voltage switch connected to the battery rack to be in the on state, so that the battery rack is connected to the corresponding direct current/direct current conversion circuit. Therefore, the direct current/direct current conversion circuit modulates a voltage provided by the battery rack and outputs a modulated to the first busbar, or the direct current/direct current conversion circuit modulates the voltage at the first busbar and outputs a modulated voltage to the battery rack to charge the battery rack. The control circuit may alternatively control the high voltage switch connected to the battery rack to be in the off state, so that the battery rack is disconnected from the corresponding direct current/direct current conversion circuit.

In a possible design, the battery system further includes a direct current/alternating current conversion circuit. The direct current/alternating current conversion circuit is separately connected to the first busbar and the load. The direct current/alternating current conversion circuit is configured to: convert a direct current at the first busbar into an alternating current, and then provide the alternating current for the load. In this embodiment of this application, the battery system may include the direct current/alternating current conversion circuit, and may be applied to an alternating current scenario.

According to a second aspect, this application provides a control method, applied to a battery system. The battery system includes a first busbar, at least one battery rack, and a control circuit. Each battery rack is connected to the first busbar, the first busbar is connected to a load; the battery rack includes a plurality of battery units, and the plurality of battery units are connected in series; each battery unit includes a battery module, a connection switch K1, and an isolation switch K2; and the connection switch K1 is connected in series to the battery module to form a first branch, and the isolation switch K2 is connected in parallel to the first branch. The method includes: controlling, based on a first voltage required by the load, connection switches K1 and isolation switches K2 of N battery units in the battery rack, to enable battery modules in the N battery units to connect to the first busbar to supply power. An output voltage of the first busbar meets the first voltage required by the load.

In a possible design, the battery system further includes at least one battery module management circuit; and the battery module management circuit is connected to the battery rack, and is configured to collect a voltage and a current of each battery unit in the connected battery rack. The method further includes: determining a state of health SOH parameter of each battery module based on the collected voltage and the collected current. The SOH parameter is used to select the N battery units from the battery rack.

In a possible design, a plurality of state types include a first state type and a second state type, and an SOH parameter range corresponding to the first state type does not overlap an SOH parameter range corresponding to the second state type.

In a possible design, the battery module management circuit is further configured to periodically collect the voltage and the current of each battery unit in the connected battery rack. The method further includes: updating, based on a last determined SOH parameter of the battery module, a state type of a battery unit to which the battery module belongs.

In a possible design, the method further includes: determining, based on an SOH parameter range corresponding to each of a plurality of preset state types and the SOH parameter of the battery module, the state type of the battery unit to which the battery module belongs; and selecting the N battery units from the battery rack based on a state type of each battery unit in the battery rack, to enable an SOH of each battery module in the battery rack to be balanced.

In a possible design, the method further includes: detecting whether a battery module in each battery unit in the battery rack is faulty; and when it is detected that a battery module in a first battery unit is faulty, controlling a connection switch K1 and an isolation switch K2 in the first battery unit, to enable the battery module in the first battery unit to be disconnected from a battery module in another battery unit.

For a technical effect of a corresponding solution in the second aspect, refer to a technical effect that can be obtained by using the corresponding solution in the first aspect. Details are not described herein.

**BRIEF DESCRIPTION OF DRAWINGS**

FIG. 1 is a schematic diagram of a structure of a conventional battery system;
FIG. 2 is a schematic diagram of a structure of a battery system;
FIG. 3(a) to FIG. 3(c) are a schematic diagram of different voltages output by a battery system;
FIG. 4 is a schematic diagram of a structure of a battery system;
FIG. 5 is a schematic diagram of a structure of a plurality of conventional battery systems with different backup power durations; and
FIG. 6(a) to FIG. 6(c) are a schematic diagram of structures of a plurality of battery systems with different backup power durations.

**DESCRIPTION OF EMBODIMENTS**

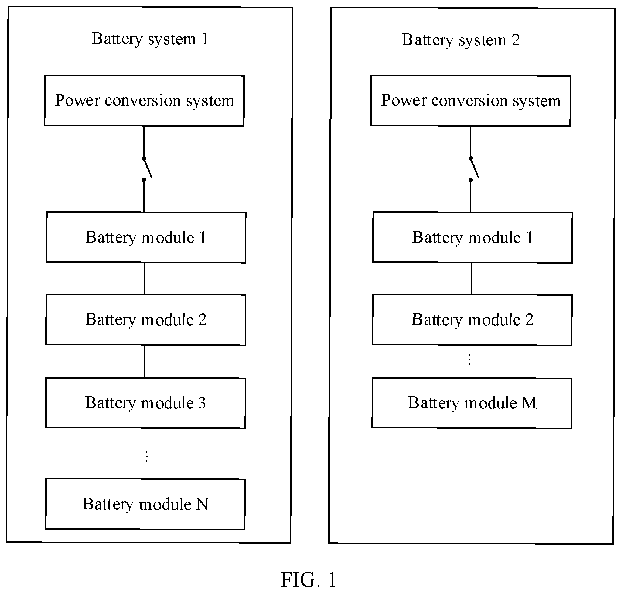

Currently, a battery system can provide only one direct current voltage level. For scenarios requiring different direct current voltage levels, independent battery systems of different voltage levels are generally designed and developed. As shown in FIG. 1, a battery system 1 includes N battery modules connected in series, and the battery system 1 provides a direct current voltage VN. A battery system 2 includes M battery modules connected in series, and the battery system 2 provides a direct current voltage VM. If a quantity M of battery modules connected in series in the battery system 2 is less than a quantity N of battery modules connected in series in the battery system 1, the direct current voltage VN is greater than the direct current voltage VM. In the two battery systems, the battery system 1 provides a high direct current voltage, and may provide a direct current voltage of a high voltage level (or referred to as providing a high voltage level). However, the battery system 2 provides a relatively low direct current voltage, and may provide a direct current voltage of a low voltage level (or referred to as providing a low voltage level).

Generally, a plurality of battery modules connected in series may be referred to as a battery rack. Each battery system may further include a power conversion system (power conversion system, PCS), which may control a charging and discharging process of the battery rack, to convert a direct current into an alternating current, or convert an alternating current into a direct current.

Because a current battery system can provide only one direct current voltage level, it is difficult to adapt to diversified direct current voltage levels required in different scenarios. In view of this, an embodiment of this application provides a battery system 100, to provide a plurality of direct current voltages, expand application scenarios, and ensure high application scenario adaptability. The following describes in detail this embodiment of this application with reference to accompanying drawings.

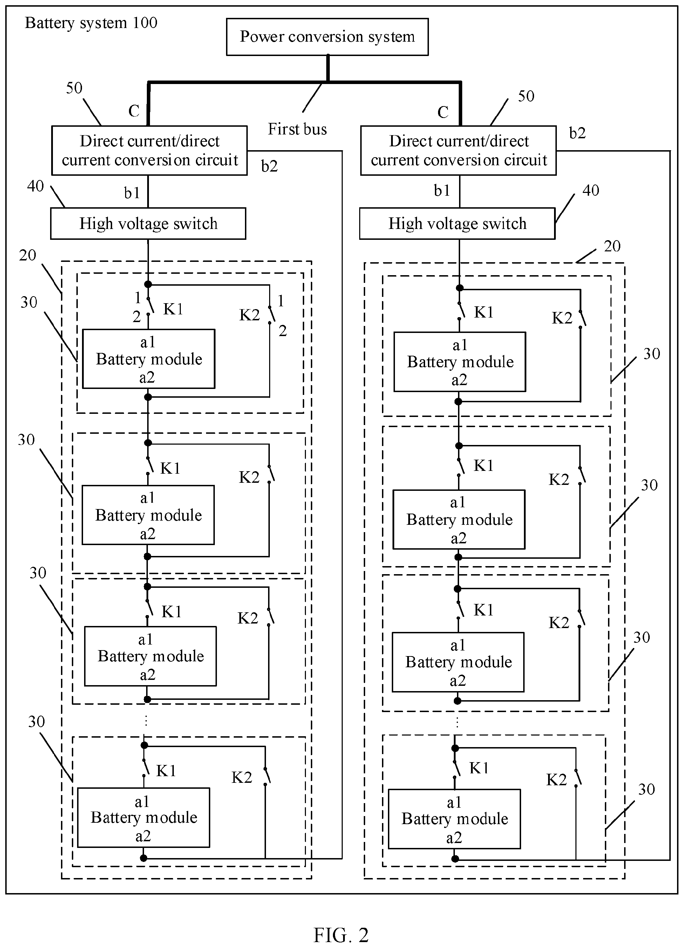

As shown in FIG. 2, the battery system may include a first busbar and at least one battery rack 20. Each battery rack 20 is coupled to the first busbar. For example, the first busbar may include a positive busbar and a negative busbar, a positive pole of the battery rack 20 may be connected to the positive busbar, and a negative pole of the battery rack 20 may be connected to the negative busbar.

By way of example, FIG. 2 shows two battery racks 20. It should be understood that the battery system may further include more than two battery racks 20. Each battery rack 20 may output a voltage to the first busbar. Therefore, a voltage at the first busbar is determined based on the voltage output by each battery rack 20 to the first busbar. If the battery system includes one battery rack 30, the voltage at the first busbar is a voltage output by the battery rack 20. If the battery system includes a plurality of battery racks 30, the voltage at the first busbar may be determined based on a voltage output by each battery rack 20.

Each battery rack 20 may include a plurality of battery units 30, and the plurality of battery units 30 are sequentially connected in series. Each battery rack 20 may include N battery units 30, where N is an integer greater than or equal to 2. Each battery unit 30 may include a battery module, a connection switch K1, and an isolation switch K2. The connection switch K1 is connected in series to the battery module to form a first branch, and the isolation switch K2 is connected in parallel to the first branch. For example, as shown in FIG. 2, a first end k1a of the connection switch K1 is connected to a first end k2a of the isolation switch K2, and may be used as a first end of the battery unit 30. A second end k1b of the connection switch K1 is connected to a first end a1 of the battery module. A second end a2 of the battery module is connected to a second end k2b of the isolation switch K2, and may be used as a second end of the battery unit 30.

The battery module may also be referred to as a battery module, a battery box, or a battery pack. The battery module may include a plurality of electrochemical cells (energy storage batteries). The plurality of electrochemical cells may be connected in series or in parallel. Optionally, the battery module may include components such as a single board, a temperature sensor, and a voltage sensor, and is configured to manage the battery module. The battery module may also include a battery management system and the like. Optionally, the battery module may include a battery state monitoring controller. For example, the battery state monitoring controller may be coupled to each energy storage battery, and is configured to manage a state of health of each energy storage battery.

A first end a1 of each battery module may be a positive terminal, and a second end a2 may be a negative terminal. Alternatively, the first end a1 of each battery module may be a negative terminal, and the second end a2 may be a positive terminal. In the following embodiment, an example in which the first end a1 of each battery module is the positive terminal and the second end a2 is the negative terminal is used for description.

In this embodiment of this application, the plurality of battery units 30 may be sequentially connected in series. In the two adjacent battery units 30, a second end of the former battery unit 30 is connected to a first end of the latter battery unit 30. A second end of the last battery unit 30 is not connected to another battery unit 30. A first end of the first battery unit 30 is not connected to another battery unit 30. A first end of the first battery unit 30 in the battery rack 20 is also the first end of the battery rack 20, and a second end of the last battery unit 30 is also the second end of the battery rack 20. The first end and the second end of the battery rack 20 are respectively connected to a positive input end and a negative input end of a load.

The battery system 100 may further include a control circuit. The control circuit may be connected to a control end of the connection switch K1 and a control end of the isolation switch K2 in each battery unit 30 in each battery rack 20. The control circuit may control the connection switch K1 to be in an on state or in an off state. The control circuit may also control the isolation switch K2 to be in an on state or in an off state.

The first busbar may be connected to the load. The control circuit may control states of the connection switch K1 and the isolation switch K2 in each battery unit 30 in the battery rack 20, to adjust the battery rack 20 to output a plurality of voltages to the first busbar, so that the battery system 100 can provide a plurality of voltage levels for the load. For example, a voltage required by the load is V1, and the control circuit may control connection switches K1 and isolation switches K2 in N1 battery units in the battery rack, so that battery modules in the N1 battery units are connected to the first busbar to supply power, to enable a voltage output by the first busbar to the load to meet the voltage V1 required by the load. For another example, a voltage required by the load is V2, and the control circuit may control connection switches K1 and isolation switches K2 in N2 battery units in the battery rack, so that battery modules in the N2 battery units are connected to the first busbar to supply power, to enable a voltage output by the first busbar to the load to meet the voltage V2 required by the load. It can be learned that the battery system 100 provided in this embodiment of this application may be applied to scenarios with different voltage requirements.

An example in which the control circuit controls an output voltage of one of the plurality of battery racks included in the battery system 100 is used below. For a battery unit 30 in a battery rack 20, when the battery unit 30 is connected to a first end of the battery rack 20 and is connected to a second end of the battery rack 20, it may be recorded as that the battery unit 30 is in an online state, that is, a battery module in the battery unit 30 connect to the first busbar. When the battery unit 30 fails to be connected to the first end of the battery rack 20 or fails to be connected to the second end of the battery rack 20, it may be recorded that the battery unit 30 is in an offline state, that is, the battery module in the battery unit 30 does not connect to the first busbar.

For example, when the connection switch K1 in the battery unit 30 is in the on state, and the isolation switch K2 is in the off state, the battery module in the battery unit 30 is in the online state. The battery module in the battery unit 30 is connected to the first busbar, that is, is connected to a loop connected to the load (for example, a direct current/direct current converter, a direct current/alternating current converter, a power conversion system, an electricity load, or a power supply apparatus) of the battery system, and may perform a charging or discharging process by using the loop. In other words, a current provided by the battery unit 30 may be transmitted to the first end or the second end of the battery rack 20, or a current at the first end or the second end of the battery rack 20 may be transmitted to the battery unit 30.

For example, when the connection switch K1 in the battery unit 30 is in the off state, and the isolation switch K2 is in the on state, the battery module in the battery unit 30 is in the offline state. The battery module in the battery unit 30 does not connect to the loop connected to the load of the battery system, and cannot perform a charging or discharging process by using the loop. In other words, a current provided by the battery unit 30 cannot be transmitted to the first end or the second end of the battery rack 20, or a current at the first end or the second end of the battery rack 20 may be transmitted to the battery unit 30.

It should be understood that the control circuit may adjust, by controlling states of the connection switch K1 and the isolation switch K2 in the battery unit 30, the battery unit 30 to be in the online state or the offline state, that is, adjust the battery module in the battery unit 30 to connect to the first busbar or disconnect from the first busbar. When adjusting the battery unit 30 to be in the online state, the control circuit may control the connection switch K1 in the battery unit 30 to be in the on state and the isolation switch K2 to be in the off state. When adjusting the battery unit 30 to be in the offline state, the control circuit may control the connection switch K1 in the battery unit 30 to be in the off state and the isolation switch K2 to be in the on state.

The control circuit may control the connection switch K1 and the isolation switch K2 in each battery unit 30, and adjust quantities of battery units 30 that are in the battery rack 20 and that are connected to the first end and the second end of the battery rack 20, that is, adjust a quantity of battery modules that are in the battery rack 20 and that are connected to the first busbar. Because the quantities of battery units 30 connected to the first end and the second end of the battery rack 20 are different, voltages output by the battery rack 20 are different. In other words, different quantities of battery modules that are in the battery rack 20 and that are connected to the first busbar may enable the battery rack 20 to output different voltages to the first busbar.

It can be learned that the control circuit may adjust the output voltage of the battery rack 20 by adjusting the quantity of battery units 30 in the online state in the battery rack 20. In other words, the control circuit may adjust, by adjusting a quantity of battery modules that are in the battery rack 20 and that connect to the first busbar to supply power, the voltage output by the battery rack 20 to the first busbar.

For a battery rack 20, battery modules of all battery units 30 in the battery rack 20 are in an online state, that is, all the battery modules in the battery rack 20 connect to the first busbar to supply power, and an output voltage of the battery rack 20 is a maximum output voltage of the battery rack 20. For example, the control circuit may adjust the battery module in each battery unit 30 in the battery rack 20 to be in an online state. For example, the control circuit may control a connection switch K1 in each battery unit 30 in the battery rack 20 to be in an on state, and an isolation switch K2 to be in an off state. In this case, a voltage between the first end and the second end of the battery rack 20 is the maximum output voltage.

For a battery rack 20, battery modules of all battery units 30 in the battery rack 20 are in an offline state, that is, all the battery modules in the battery rack 20 do not connect to the first busbar, and an output voltage of the battery rack 20 is zero. For example, the control circuit may adjust the battery module in each battery unit 30 in the battery rack 20 to be in an offline state. For example, the control circuit may control a connection switch K1 in each battery unit 30 in the battery rack 20 to be in an off state, and an isolation switch K2 to be in an on state. In this case, a voltage between the first end and the second end of the battery rack 20 is zero.

When a voltage required by a load 1 is V1, the control circuit may adjust all the battery modules in the N1 battery units 30 in the battery rack 20 to be in an online state, that is, control the battery modules in the N1 battery units to connect to the first busbar to supply power, and another battery module in the battery rack 20 except the battery modules in the N1 battery units 30 does not connect to the first busbar, to enable a voltage provided by the battery rack to the first busbar, that is the voltage output by the first busbar to the load, to meet the voltage V1 required by the load. The output voltage of the first busbar may be adjusted by the control circuit by adjusting a quantity of battery modules accessing the first busbar.

For example, the control circuit may adjust all the battery modules in the N1 battery units 30 in the battery rack 20 to be in an online state. A total quantity of all the battery units 30 in the battery rack 20 may be denoted as P, N1 may be an integer in a set A, and the set A may be [0, P]. The control circuit may adjust other battery units in the battery rack 30 except the N1 battery units 30 to be in an offline state, that is, the other P-N1 battery units are in the offline state.

The control circuit may control the connection switches K1 in the N1 battery units 30 in the battery rack 20 to be in an on state, the isolation switches K2 to be in an off state, connection switches K1 in the P-N1 battery units 30 to be in an off state, and isolation switches K2 to be in an on state, so that all battery modules in the N1 battery units 30 connect to the first busbar, and none of the P-N1 battery units 30 is connected to the first busbar. In this case, the voltage between the first end and the second end of the battery rack 20 is a sum of voltages provided by battery modules in the N1 battery units 30. It can be learned that the control circuit may adjust, by adjusting the quantity of battery modules that are in the battery rack 20 and that connect to the first busbar to supply power, a voltage provided by the battery rack 20 to the first busbar, that is, adjust the voltage output by the first busbar to the load.

In a possible implementation, the first busbar in the battery system 100 is coupled to the load. When the battery system 100 outputs a voltage to the load, output voltages of the battery racks are the same, that is, running statuses of the battery racks are the same. In other words, quantities of battery units in an online state in the battery racks are the same. When an output voltage of each battery rack is a maximum output voltage, a voltage output by the battery system 100 is a maximum total system voltage.

In still another possible implementation, the battery system 100 includes at least one direct current/direct current conversion circuit. The at least one direct current/direct current conversion circuit 50 is in a one-to-one correspondence with the at least one battery rack. Each battery rack 20 is connected to the first busbar by using a corresponding direct current/direct current conversion circuit 50. As shown in FIG. 2, the first end of the battery rack 20 may be connected to a first end b 1 of a corresponding direct current/direct current conversion circuit 50, and the second end of the battery rack 20 may be connected to a second end b2 of a corresponding direct current/direct current conversion circuit 50. A third end C of each direct current/direct current conversion circuit 50 is coupled to the first busbar. The direct current/direct current conversion circuit 50 may form a charging and discharging loop with a corresponding battery rack.

The direct current/direct current conversion circuit 50 may include but is not limited to one or more of the following circuits: a linear voltage regulator power supply circuit, a buck (Buck) conversion circuit, a boost (Boost) conversion circuit, a buck-boost (Buck-Boost) conversion circuit, a three-level buck (Buck) conversion circuit, a switched-capacitor converter circuit, an inductor-inductor-capacitor (LLC) harmonic conversion circuit, a dual active full bridge (dual active bridge, DAB) direct current-direct current conversion circuit, a forward conversion circuit, and a flyback conversion circuit, a half-bridge push-pull circuit, a full-bridge push-pull circuit, a full-bridge phase-shift conversion circuit, and the like. This not listed one by one in this embodiment of this application.

The battery system 100 may be configured to store electric energy. For example, when the first busbar is connected to the external power supply, each direct current/direct current conversion circuit 50 may modulate a voltage at the first busbar into a charging voltage, and provide the charging voltage for the connected battery rack 20 to charge the connected battery rack 20, and the battery rack 20 may store electric energy.

The battery system 100 may be configured to provide electric energy. For example, when the first busbar is connected to the load, each direct current/direct current conversion circuit 50 may modulate a voltage output by the connected battery rack 20, and output a modulated voltage to the first busbar, to provide the voltage for the load, so that the battery system 100 provides electric energy for the load. When the voltage output by the battery rack 20 connected to the direct current/direct current conversion circuit 50 is the maximum output voltage, the direct current/direct current conversion circuit 50 modulates the maximum output voltage output by the connected battery rack 20, and a modulated voltage is a modulated maximum voltage (which may also be referred to as a maximum discharge voltage) corresponding to the direct current/direct current conversion circuit 50. If a voltage output by each direct current/direct current conversion circuit 50 is a corresponding modulated maximum voltage, the voltage output by the battery system 100 is the maximum total system voltage.

The control circuit may be connected to a control end of the direct current/direct current conversion circuit 50, and the direct current/direct current conversion circuit 50 may perform voltage modulation (conversion). Generally, the direct current/direct current conversion circuit 50 includes one or more switching transistors, and the control end of the direct current/direct current conversion circuit 50 may include control electrodes (gates) of these switching transistors. The control circuit may be a logic circuit having a logical operation capability, and can generate a control signal. The control signal is used to turn on or off each switching transistor in the direct current/direct current conversion circuit 50, so that the direct current/direct current conversion circuit 50 implements voltage conversion.

For any one of the foregoing battery systems 100, the control circuit may pre-store a correspondence between an output voltage (the total system voltage, the voltage required by the load, or the like) of the battery system 100 and a quantity of battery units (a quantity of battery modules that are in each battery rack and that connect to the first busbar to supply power). For example, a total system voltage output by the battery system 100 is U1, and a corresponding quantity of battery units is num1. A total system voltage output by the battery system 100 is U2, and a corresponding quantity of battery units is num2.

The battery system 100 may include a display component, a button, and the like. A voltage adjustment instruction may be triggered by using the button or a menu on a display interface. Optionally, the voltage adjustment instruction may be sent by an external device (a device outside the battery system) to the control circuit. The control circuit may receive the voltage adjustment instruction. The voltage adjustment instruction may carry information used to indicate the voltage (denoted as a first voltage for ease of description) required by the load connected to the first busbar. The voltage adjustment instruction may be used to indicate the control circuit to adjust a quantity of battery units in an online state (the included battery module is connected to the first busbar) in the battery racks, so that the output voltage of the first busbar meets the first voltage. For example, the output voltage of the first busbar is the first voltage, or is close to the first voltage (the load connected to the first busbar can run normally). Optionally, the first voltage carried in the voltage adjustment instruction may be a value between a maximum value of the total system voltage output by the battery system 100 and zero.

For example, the control circuit may receive a first adjustment instruction (which may also be referred to as a maximum output voltage instruction). The first adjustment instruction is used to indicate the control circuit to adjust the output voltage of the battery system 100 to the maximum total system voltage of the battery system 100. After receiving the first adjustment instruction, the control circuit may adjust the output voltages of all the battery racks 20 to the maximum output voltage of each battery rack 20, so that the output voltage of the first busbar is the maximum output voltage, that is, the voltage provided by the battery system 100 may be the maximum output voltage of the battery system 100.

For another example, the control circuit may receive a second adjustment instruction (which may also be referred to as an output voltage stop instruction). The second adjustment instruction is used to indicate the control circuit to adjust the output voltage of the battery system 100 to zero. After receiving the second adjustment instruction, the control circuit may adjust the output voltages of all the battery racks 20 to zero, and the voltage at the first busbar to zero, that is, the voltage provided by the battery system 100 is zero.

For another example, the control circuit may receive a third adjustment instruction (which may also be referred to as an output specified voltage instruction). The third adjustment instruction is used to indicate the control circuit to adjust the output voltage of the battery system 100 to a specified voltage. After receiving the third adjustment instruction, the control circuit may adjust a quantity of battery units 30 in an online state in all the battery racks 20 (a quantity of battery modules that are in all the battery racks 20 and that connect to the first busbar to supply power), so that the output voltage of the first busbar may be the specified voltage.

In an example, the control circuit may determine, based on the pre-stored correspondence between the output voltage (the total system voltage, the voltage required by the load, and the like) of the battery system 100 and the quantity of battery units (the quantity of battery modules that are in each battery rack and that connect to the first busbar to supply power), a quantity of battery units corresponding to the first voltage. For ease of description, the quantity of battery units corresponding to the first voltage is denoted as a first quantity.

For any battery rack (for example, a first battery rack) in the battery system 100, the control circuit may select a first quantity M of battery units 30 from the first battery rack, and adjust the selected first quantity of battery units 30 to be in an online state. For example, the control circuit may control connection switches K1 in the selected first quantity of battery units 30 to be in an on state, and isolation switches K2 to be in an off state, so that battery modules in the first quantity of battery units 30 are connected to the first busbar. A connection switch K1 in a battery unit except the first quantity of battery units 30 in the first battery rack is in an off state, and an isolation switch K2 is in an on state, so that a battery module in the battery unit 30 except the first quantity of battery units 30 in the first battery rack does not connect to the first busbar.

Optionally, the control circuit may randomly select the first quantity of battery units from the first battery rack, or randomly select the first quantity of battery units from the first battery rack. The control circuit may select the first quantity of battery units from the first battery rack in a preset selection manner.

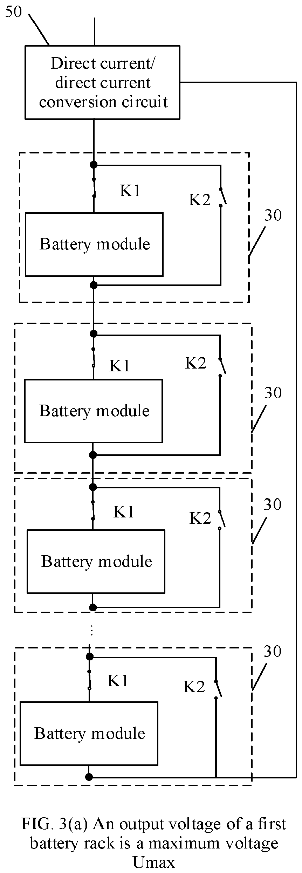

In an example, when an output voltage of the first battery rack is a maximum output voltage Umax (as shown in FIG. 3(a)), the control circuit controls battery modules in all battery units 30 in the first battery rack to connect to the first busbar. For example, the control circuit may control connection switches K1 in all the battery units 30 to be in an on state, and isolation switches K2 to be in an off state.

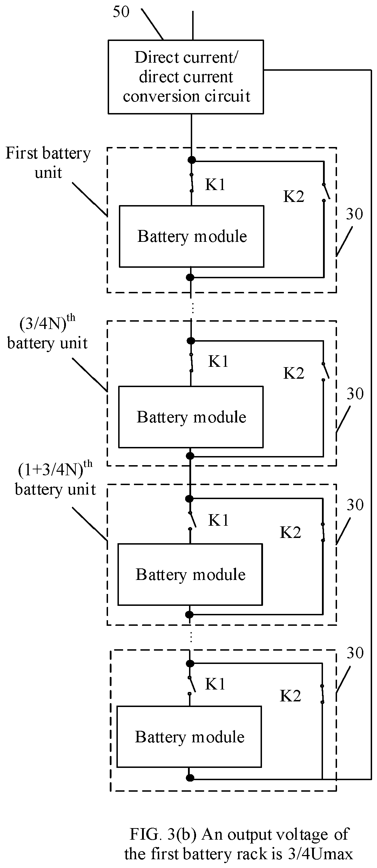

When the output voltage of the first battery rack is $\frac{3}{4}$Umax (as shown in in FIG. 3(b)), the control circuit controls battery modules in $\frac{3}{4}$P battery units 30 in the first battery rack to connect to the first busbar, and battery modules in other battery units 30 except the $\frac{3}{4}$P battery units 30 do not access the first busbar. For example, the control circuit may control connection switches K1 in the $\frac{3}{4}$P battery units 30 in the first battery rack to be in an on state, isolation switches K2 to be in an off state, connection switches K1 in the other battery units 30 except the $\frac{3}{4}$P battery units 30 to be in an off state, and isolation switches K2 to be in an on state.

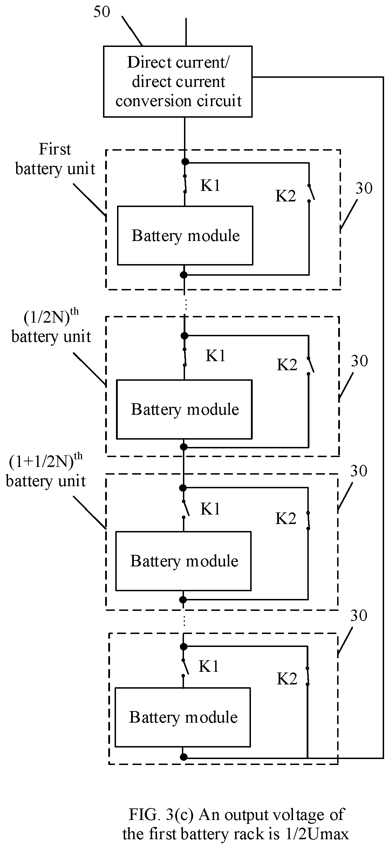

When the output voltage of the first battery rack is $\frac{1}{2}$Umax (as shown in in FIG. 3(c)), the control circuit controls battery modules in $\frac{1}{2}$P battery units 30 in the first battery rack to connect to the first busbar, and battery modules in other battery units 30 except the $\frac{1}{2}$P battery units 30 do not connect to the first busbar. For example, the control circuit controls connection switches K1 in the $\frac{1}{2}$P battery units 30 in the first battery rack to be in an on state, isolation switches K2 to be in an off state, connection switches K1 in other battery units 30 except the $\frac{1}{2}$P battery units 30 to be in an off state, and isolation switches K2 to be in an on state.

In this embodiment of this application, the control circuit may control the battery modules in the battery units 30 in the first battery rack to be in an online state (connect to the first busbar) or an offline state (not connect to the first busbar), to adjust the voltage provided by the first battery rack to the first busbar, to adjust the output voltage of the first busbar. Therefore, the first battery rack may be applied to an application scenario in which a required voltage level does not exceed the maximum output voltage of the first battery rack. It can be learned that the battery system 100 provided in this embodiment of this application can meet diversified direct current voltage levels required in different scenarios, and an unconventional battery system is applicable only to a scenario of a single direct current voltage level.

In a possible design, as shown in FIG. 2, the battery system 100 may include at least one high voltage switch 40. A quantity of the at least one high voltage switch 40 may be the same as a quantity of the at least one battery rack. The at least one high voltage switch 40 may be in a one-to-one correspondence with the at least one battery rack.

In an example, the battery rack 20 may be connected to a corresponding high voltage switch 40. The battery rack 20 may be connected to the first busbar by using the high voltage switch. In still another example, the first end of the battery rack 20, the corresponding high voltage switch 40, and a first end of a corresponding direct current/direct current conversion circuit are sequentially connected in series. The second end of the battery rack 20 is connected to a second end of the direct current/direct current conversion circuit. The third end of the direct current/direct current conversion circuit is connected to the first busbar.

In a possible design, the battery system 100 may include a direct current/alternating current conversion circuit. The battery system 100 may be applied to an alternating current power consumption scenario. The first busbar is connected to an input side of the direct current/alternating current conversion circuit, and an output side of the direct current/alternating current conversion circuit is connected to the load. The direct current/alternating current conversion circuit may process a direct current on the first busbar into an alternating current, and provide the alternating current for the load. In an example, the load may be a power conversion system.

Generally, battery modules in a same battery rack in the battery system are put into use and retired at the same time. If each of some battery modules in the battery rack still has a relatively good state of health (state of health, SOH) when the battery modules are retired, that is, the SOH of each battery module in the battery rack is inconsistent, a waste of resources of the battery module with a relatively SOH is caused.

To fully use battery modules in a same battery rack, maximize use efficiency of the battery rack, and avoid a waste of resources, the battery system 100 may further include one or more battery module management circuits 50.

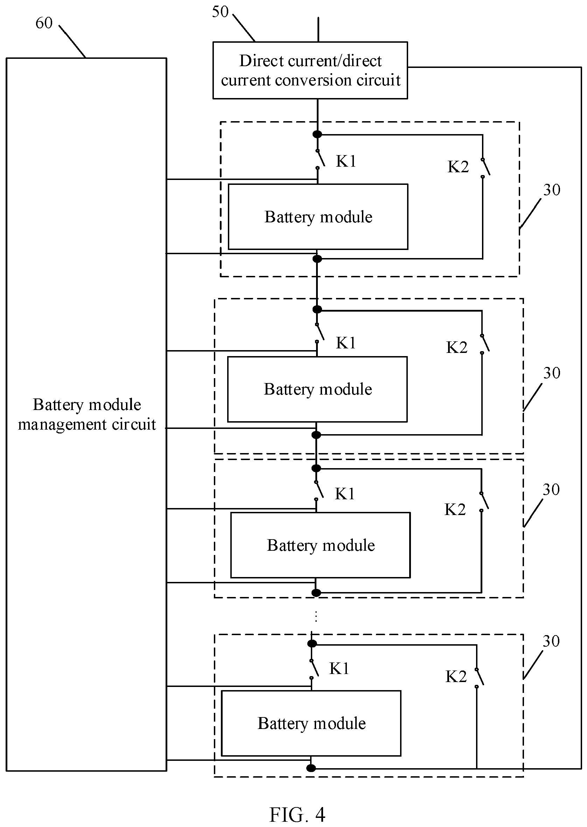

In an example, as shown in FIG. 4, the battery system 100 includes one battery module management circuit 60. Each battery module in each battery rack 20 may be coupled to the battery module management circuit 60. The battery module management circuit 60 is configured to collect a voltage and a current of each battery unit 30 in the connected battery rack, and determine a state of health SOH parameter of each battery module based on the collected voltage and the collected current. The battery module management circuit 60 may determine the SOH parameter of each battery module based on the collected voltage and the collected current by using any existing method for determining an SOH of the battery module. The battery module management circuit 60 may further include a memory, configured to store data required for determining the SOH parameter of each battery module, for example, collected data such as a voltage value and a current value of the battery module, or may store a rated parameter of the battery module, for example, an internal resistance of the battery module, or may store a historical parameter of the battery module, for example, a previously determined SOH parameter of the battery module.

In another example, the battery system 100 may alternatively include a plurality of battery module management circuits 60. The plurality of battery racks 20 may be in a one-to-one correspondence with the plurality of battery module management circuits 60. The battery rack 20 is coupled to the corresponding battery module management circuit 60. For example, the battery module management circuit 60 may be coupled to each battery module in a corresponding battery rack 20, may collect a voltage and a current of each battery unit in the connected battery rack, and determine a state of health SOH parameter of each battery module based on the collected voltage and the collected current. The following provides description by using an example in which the battery system 100 includes a plurality of battery module management circuits 60.

The battery module management circuit 60 may be integrated into the BMS. Alternatively, the battery module management circuit 60 may be the battery management system (battery management system, BMS). The battery module management circuit 60 may further perform a function except determining the SOH parameter of each battery module, for example, battery module temperature detection.

The control circuit may be coupled to each battery module management circuit 60. For example, the control circuit may be connected to the battery module management circuit 60 through a bus, and exchange data or information through the bus. For example, the control circuit may receive the SOH parameter of each battery module provided by each battery module management circuit 60. The SOH parameter of each battery module determined by the battery module management circuit 60 may be used by the control circuit to select a battery unit from the battery rack based on the SOH parameter of each battery module.

In a possible design, the battery module management circuit 60 may periodically determine the SOH parameter of each battery module, and send the SOH parameter to the control circuit, so that the control circuit can periodically obtain the SOH parameter of each battery module. Optionally, the battery module management circuit 60 may collect a voltage and a current of each battery module based on a set period, determine the SOH parameter of each battery module, and send the SOH parameter to the control circuit, so that the control circuit can periodically obtain the SOH parameter of each battery module. A granularity of the set period may be an hour, a minute, a second, or the like.

For any battery rack (that is, the first battery rack) in the battery system 100, the control circuit may determine a state type of each battery module in the first battery rack based on SOH ranges of at least two state types and the SOH parameter of each battery module in the first battery rack. For example, the at least two state types may include a first state type and a second state type, an SOH range corresponding to the first state type may be denoted as a set B 1, and an SOH range corresponding to the second state type may be denoted as a set B2. The set B 1 and the set B2 have no overlapping element, so that one battery module has only one state type. In this embodiment of this application, a state type of a battery module may be used as a state type of a battery unit to which the battery module belongs.

The control circuit may receive (or obtain) the SOH parameter of each battery module in the first battery rack, and may determine a state type of each battery unit in the first battery rack based on the SOH ranges of the at least two state types, or update a state type of each battery unit in the first battery rack. It may be understood that a state type of a battery module may dynamically change, or a state type of a battery unit may dynamically change.

The control circuit may select the first quantity of battery units from battery units whose state types are a third state type based on current state types of battery units in the first battery rack (also state types of battery modules that are last determined by the control circuit). The third state type may be the first state type or the second state type. In other words, the control circuit may select the first quantity of battery units from one type of state type. For example, the first quantity of battery units are selected from all battery units whose state types are the first state type. Alternatively, the first quantity of battery units are selected from all battery units whose state types are the second state type.

In a possible case, a total quantity num1 of battery units whose state types are the third state type is less than the first quantity, and the control circuit may determine a difference dn between num1 and the first quantity, and select battery units whose quantity is the difference dn from battery units whose state types are a fourth state type (a state type except the third state type in the plurality of state types). The control circuit may control all battery units whose state types are the third state type and a battery module in the difference dn battery units to connect to the first busbar, and a battery module in another battery unit not to connect to the first busbar.

In a possible implementation, after the control circuit controls all battery units whose state types are the third state type in the first battery rack and the battery modules in the difference dn battery units to connect to the first busbar, and the battery module in the another battery unit does not connect to the first busbar, the battery module management circuit 60 corresponding to the first battery rack may determine the SOH parameter of each battery module in the first battery rack, and send the SOH parameter of each battery module to the control circuit. The control circuit may re-determine a state type of each battery module in the first battery rack, that is, determine a state type of each battery unit. The control circuit may reselect the first quantity of battery units from the first battery rack based on the re-determined state type of each battery unit, and control battery modules in the reselected first quantity of battery units to connect to the first busbar, a battery module in another battery unit in the first battery rack does not connect to the first busbar.

In such a design, when the first battery rack provides the first voltage, each battery unit can be controlled to dynamically connect to the first battery rack based on the SOH of each battery module, so that each battery unit can be alternately put into each battery module, and the SOH of each battery module can be balanced or consistent.

In a possible implementation, the battery module management circuit 60 may further detect whether a battery module in each battery unit 30 in the connected battery rack is faulty. For example, the battery module management circuit 60 detects at least one of fault cases such as an overvoltage fault, an overcurrent fault, an overtemperature fault, or an internal short circuit fault that occur on the battery module.

The battery module management circuit 60 may be connected to the connection switch K1 and the isolation switch K2 in each battery unit 30 in the connected battery rack, to control an on or off state of each switch. If the battery module management circuit 60 detects that the battery module in the first battery unit is faulty, the battery module management circuit 60 may control the connection switch K1 in the first battery unit to be in an on state and the isolation switch K2 to be in an off state, so that the faulty battery module can be isolated from the battery rack without affect running of another battery module in the battery rack, thereby improving availability of the battery system.

The battery module management circuit 60 may send fault indication information including an identifier of the faulty battery module to the control circuit, so that the control circuit learns the identifier of the faulty battery module. For example, the fault indication information that carries an identifier of the first battery unit is sent to the control circuit.

In a possible design, the battery module management circuit 60 may include a plurality of management subcircuits. The plurality of sub-management circuits are in a one-to-one correspondence with the plurality of battery units 30 in the battery rack connected to the battery module management circuit 60. The sub-management circuit is connected to a connection switch K1 and an isolation switch K2 in a corresponding battery unit 30, and controls an on or off state of each switch. The sub-management circuit may be configured to determine whether a battery module in the corresponding battery unit is faulty. If the sub-management circuit detects that the battery module in the first battery unit is faulty, the sub-management circuit may control the connection switch K1 in the first battery unit to be in an on state and the isolation switch K2 to be in an off state, so that the faulty battery module can be isolated from the battery rack.

In a possible implementation, the battery module management circuit 60 may further detect whether a battery module in each battery unit 30 in the connected battery rack is faulty. If it is detected that a fault occurs in a battery module in a second battery unit, fault indication information may be sent to the control circuit. The fault indication information may include an identifier of the second battery unit. After receiving the fault indication information, the control circuit may adjust a battery unit corresponding to the identifier in the fault indication information to be in an offline state. For example, the second battery unit is adjusted to be in an offline state. In such a design, a faulty battery module is isolated from the battery rack without affect running of another battery module in the battery rack, thereby improving availability of the battery system.

After receiving the fault indication information, the control circuit may no longer adjust a state of a battery unit corresponding to the identifier included in the fault indication information, or in other words, no longer control the connection switch K1 and the isolation switch K2 in the battery unit to which the faulty battery module belongs. In other words, when the control circuit selects the first quantity of battery units from the first battery rack, the selected first quantity of battery units do not include the faulty battery unit.

The battery system 100 provided in this embodiment of this application not only can meet diversified direct current voltage levels required in different scenarios, but also can meet diversified backup power durations required in different scenarios.

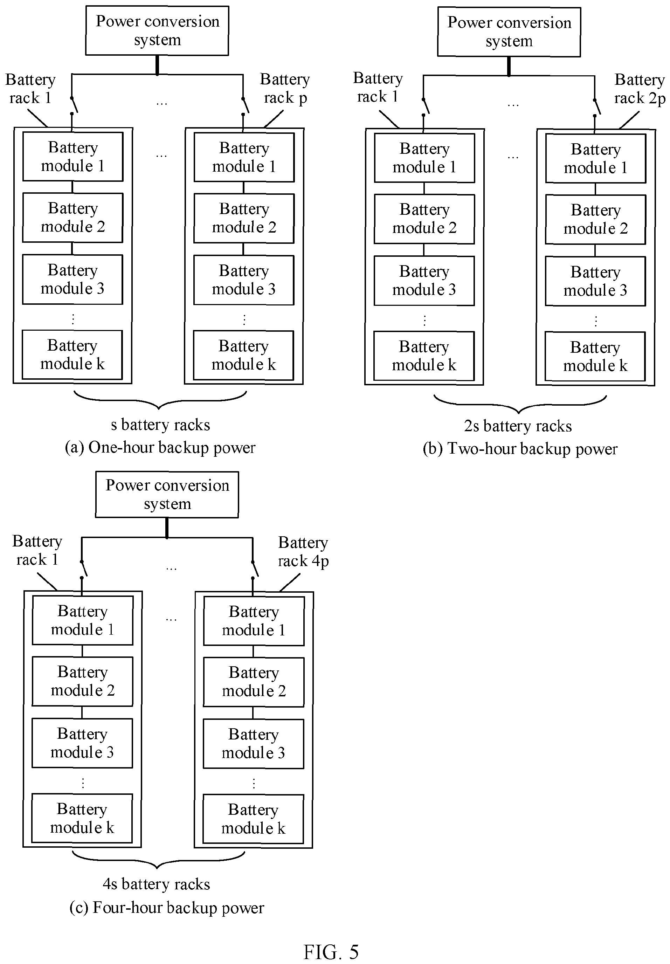

In a scenario in which a voltage requirement is $\frac{1}{2}Umax$, each battery rack in a conventional battery system includes k battery modules connected in series, and a maximum output voltage of each battery rack is $\frac{1}{2}Umax$. As shown in FIG. 5, it is assumed that s battery racks can provide one-hour backup power, that is, charging at a constant power for one hour or discharging at a constant power for one hour. If the conventional battery system includes 2s battery racks connected in parallel, the conventional battery system can provide two-hour backup power. If the conventional battery system includes 4s battery racks connected in parallel, the conventional battery system can provide four-hour backup power.

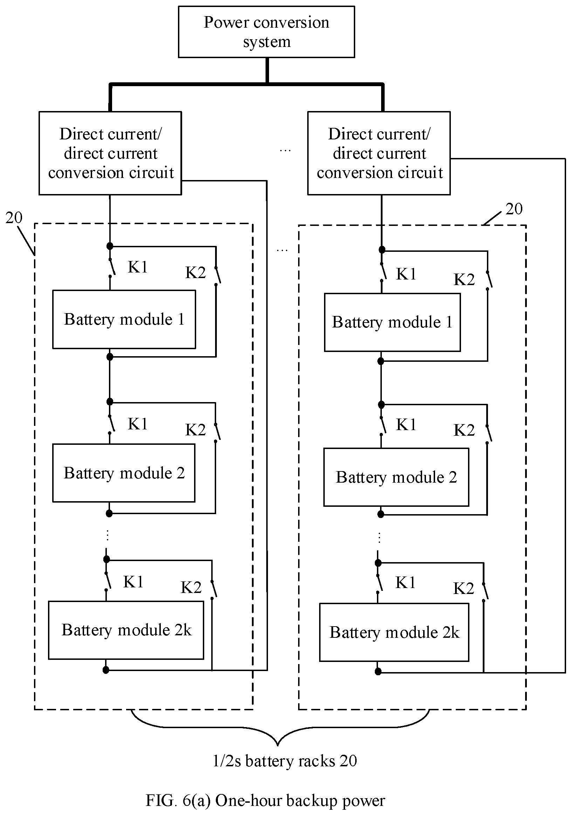

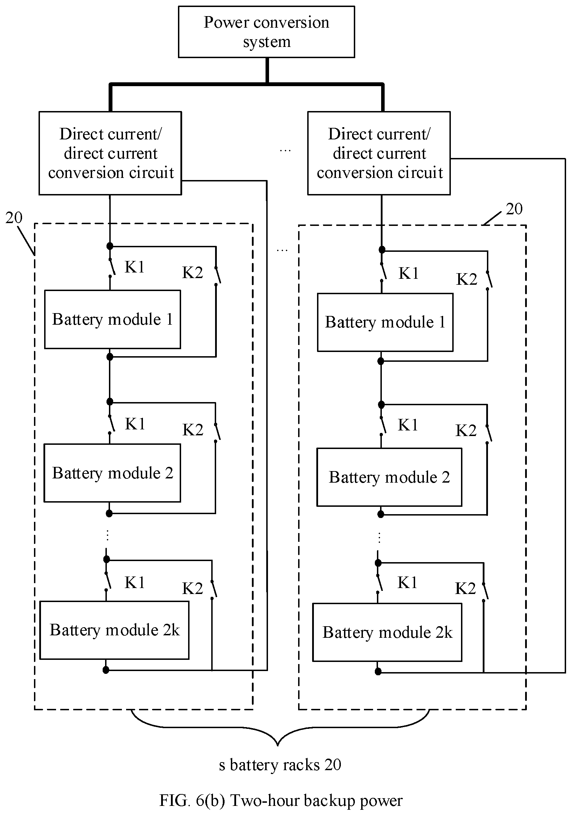

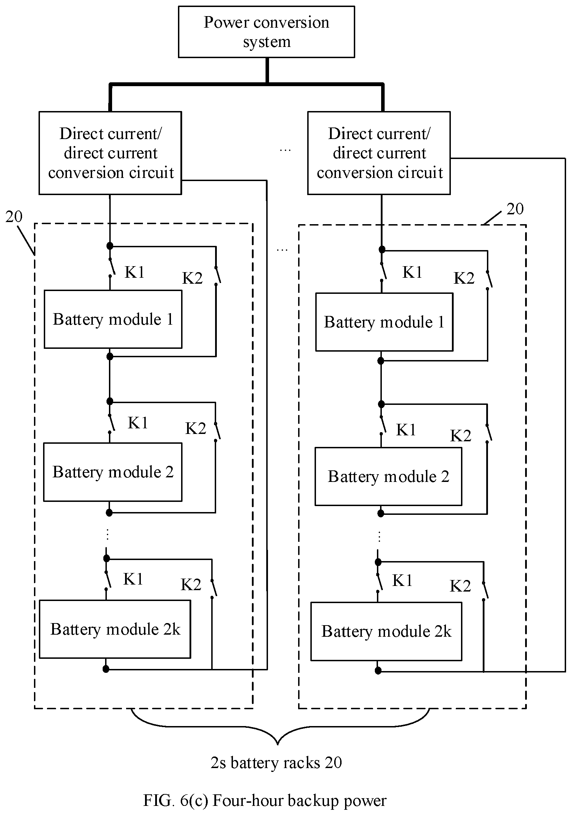

However, the maximum output voltage of each battery rack in the battery system 100 provided in this embodiment of this application is Umax, each battery rack 20 may include P battery units 30, and each battery unit 30 includes one battery module. Therefore, each battery rack 20 includes P battery modules. In this embodiment of this application, P may be twice of k. In a scenario in which a voltage requirement is $\frac{1}{2}Umax$, as shown in FIG. 6(a) to FIG. 6(c), the battery system 100 includes 2 s battery racks 20 connected in parallel, and can provide one-hour backup power. Alternatively, the battery system 100 includes s battery racks 20 connected in parallel, and can provide two-hour backup power. Alternatively, the battery system 100 includes 2s battery racks 20 connected in parallel, and can provide four-hour backup power.

It can be learned that the battery rack in the battery system 100 may output a high voltage level, and is applied in a scenario in which a low voltage level is required. Therefore, each battery rack 20 has a higher capacity. When a battery system with a same backup time is formed, compared with the conventional battery system, the battery system 100 provided in this embodiment of this application may include a smaller quantity of battery racks. Therefore, a quantity of devices such as a high voltage switch, a cable, and a backup power switch can be reduced, thereby reducing costs of the battery system.

It is clear that a person skilled in the art can make various modifications and variations to this application without departing from the scope of this application. This application is intended to cover these modifications and variations of this application provided that they fall within the scope of protection defined by the claims and their equivalent technologies.

**Claims**

1. A battery system, comprising a first busbar, at least one battery rack, and a control circuit, wherein each battery rack is connected to the first busbar, and the first busbar is connected to a load; the battery rack comprises a plurality of battery units, and the plurality of battery units are connected in series; each battery unit comprises a battery module, a connection switch K1, and an isolation switch K2; and the connection switch K1 is connected in series to the battery module to form a first branch, and the isolation switch K2 is connected in parallel to the first branch; and

the control circuit is connected to control ends of the connection switch K1 and the isolation switch K2, and is configured to:

control, based on a first voltage required by the load, connection switches K1 and isolation switches K2 of N battery units in the battery rack, to enable battery modules in the N battery units to connect to the first busbar to supply power, wherein an output voltage of the first busbar meets the first voltage required by the load.

2. The battery system according to claim 1, wherein the control circuit is further configured to:

determine, based on the first voltage and a correspondence between a voltage required by the load and a quantity of battery units, that a quantity of battery units corresponding to the first voltage is N, wherein the correspondence comprises a plurality of voltages required by the load.

3. The battery system according to claim 1 or 2, wherein the battery system further comprises at least one battery module management circuit, and the battery module management circuit is separately connected to the battery rack and the control circuit; and

the battery module management circuit is configured to: collect a voltage and a current of each battery unit in the connected battery rack, and determine a state of health SOH parameter of each battery module based on the collected voltage and the collected current, to enable the control circuit to select the N battery units from the battery rack based on the SOH parameter of each battery module.

4. The battery system according to claim 3, wherein the control circuit is further configured to:

determine, based on an SOH parameter range corresponding to each of a plurality of preset state types and the SOH parameter of the battery module, a state type of a battery unit to which the battery module belongs; and

select the N battery units from the battery rack based on a state type of each battery unit in the battery rack, to enable an SOH of each battery module in the battery rack to be balanced.

5. The battery system according to claim 4, wherein the battery module management circuit is specifically configured to: periodically collect the voltage and the current of each battery unit in the connected battery rack, determine the state of health SOH parameter of each battery module based on the collected voltage and the collected current, and provide the state of health SOH parameter of the battery module to the control circuit; and

the control circuit is further configured to:

update, based on a last received SOH parameter of the battery module, the state type of the battery unit to which the battery module belongs.

6. The battery system according to any one of claims 3 to 5, wherein the plurality of state types comprise a first state type and a second state type, and an SOH parameter range corresponding to the first state type does not overlap an SOH parameter range corresponding to the second state type.

7. The battery system according to any one of claims 3 to 6, wherein the battery module management circuit is separately connected to the control end of the connection switch K1 and the control end of the isolation switch K2 in each battery unit in the connected battery rack; and

the battery module management circuit is further configured to: detect whether a battery module in each battery unit in the connected battery rack is faulty; and when detecting that a battery module in a first battery unit is faulty, control a connection switch K1 and an isolation switch K2 in the first battery unit, to enable the battery module in the first battery unit to be disconnected from a battery module in another battery unit.

8. The battery system according to any one of claims 3 to 6, wherein the battery module management circuit is further configured to: detect whether a battery module in each battery unit in the connected battery rack is faulty; and after detecting that a battery module in a second battery unit is faulty, provide fault indication information comprising an identifier of the second battery unit for the control circuit, to enable the control circuit to control the battery module in the second battery unit to be disconnected from a battery module in another battery unit.

9. The battery system according to claim 8, wherein the control circuit is further configured to:

control, based on an identifier of a third battery unit in received fault indication information, a connection switch K1 and an isolation switch K2 in the third battery unit corresponding to the identifier of the third battery unit, to enable a battery module in the third battery unit to be disconnected from the battery module in the another battery unit.

10. The battery system according to any one of claims 1 to 9, further comprising at least one high voltage switch, wherein the at least one battery rack is in a one-to-one correspondence with the at least one high voltage switch, and the control circuit is connected to a control end of the high voltage switch; and

the battery rack is connected to a corresponding high voltage switch, and the battery rack is connected to the first busbar when the corresponding high voltage switch is in an on state, or the battery rack is disconnected from the first busbar when the corresponding high voltage switch is in an off state.

11. The battery system according to any one of claims 1 to 9, further comprising at least one direct current/direct current conversion circuit, wherein the at least one direct current/direct current conversion circuit is in a one-to-one correspondence with the at least one battery rack;

the battery rack is connected to a first side of a corresponding direct current/direct current conversion circuit, and another side of the corresponding direct current/direct current conversion circuit is connected to the first busbar; and the direct current/direct current conversion circuit is configured to: modulate an output voltage of the battery rack, and transmit a modulated voltage to the first busbar.

12. The battery system according to claim 11, wherein the direct current/direct current conversion circuit is further configured to modulate a voltage at the first busbar to a charging voltage to charge the connected battery rack.

13. The battery system according to claim 11 or 12, further comprising at least one high voltage switch, wherein the at least one battery rack is in a one-to-one correspondence with the at least one high voltage switch, and the control circuit is connected to a control end of the high voltage switch; and the battery rack, the high voltage switch corresponding to the battery rack, and the direct current/direct current conversion circuit corresponding to the battery rack are sequentially connected in series, and the battery rack is connected to the corresponding direct current/direct current conversion circuit when the corresponding high voltage switch is in an on state, or the battery rack is disconnected from the corresponding direct current/direct current conversion circuit when the corresponding high voltage switch is in an off state.

14. The battery system according to any one of claims 1 to 13, further comprising a direct current/alternating current conversion circuit, wherein the direct current/alternating current conversion circuit is separately connected to the first busbar and the load; and the direct current/alternating current conversion circuit is configured to: convert a direct current at the first busbar into an alternating current, and then provide the alternating current for the load.

15. A control method, applied to a battery system, wherein the battery system comprises a first busbar, at least one battery rack, and a control circuit, wherein each battery rack is connected to the first busbar, and the first busbar is connected to a load; the battery rack comprises a plurality of battery units, and the plurality of battery units are connected in series; each battery unit comprises a battery module, a connection switch K1, and an isolation switch K2; and the connection switch K1 is connected in series to the battery module to form a first branch, and the isolation switch K2 is connected in parallel to the first branch; and
the method comprises:
controlling, based on a first voltage required by the load, connection switches K1 and isolation switches K2 of N battery units in the battery rack, to enable battery modules in the N battery units to connect to the first busbar to supply power, wherein an output voltage of the first busbar meets the first voltage required by the load.

16. The method according to claim 15, wherein the battery system further comprises at least one battery module management circuit; and the battery module management circuit is connected to the battery rack, and is configured to collect a voltage and a current of each battery unit in the connected battery rack; and
the method further comprises:
determining a state of health SOH parameter of each battery module based on the collected voltage and the collected current, wherein the SOH parameter is used to select the N battery units from the battery rack.

17. The method according to claim 16, wherein the method further comprises:

determining, based on an SOH parameter range corresponding to each of a plurality of preset state types and the SOH parameter of the battery module, a state type of a battery unit to which the battery module belongs; and selecting the N battery units from the battery rack based on a state type of each battery unit in the battery rack, to enable an SOH of each battery module in the battery rack to be balanced.

18. The method according to claim 15 or 16, wherein the method further comprises:
detecting whether a battery module in each battery unit in the battery rack is faulty; and when it is detected that a battery module in a first battery unit is faulty, controlling a connection switch K1 and an isolation switch K2 in the first battery unit, to enable the battery module in the first battery unit to be disconnected from a battery module in another battery unit.

| Battery system 1 | Battery system 2 |
|---|---|
| Power conversion system | Power conversion system |
| Battery module 1 | Battery module 1 |
| Battery module 2 | Battery module 2 |
| Battery module 3 | Battery module M |
| ⋮ | |
| Battery module N | |

FIG. 1

FIG. 2

FIG. 3(a) An output voltage of a first
battery rack is a maximum voltage
Umax

FIG. 3(b) An output voltage of
the first battery rack is 3/4Umax

FIG. 3(c) An output voltage of
the first battery rack is 1/2Umax

60

50

Direct current/direct
current conversion circuit

K1

K2

30

Battery module

Battery module
management circuit

K1

K2

30

Battery module

K1

K2

30

Battery module

K1

K2

30

Battery module

FIG. 4

Power conversion
system

Battery
rack 1
...
Battery
rack p

Battery
module 1

Battery
module 2

Battery
module 3

Battery
module k

...

Battery
module 1

Battery
module 2

Battery
module 3

Battery
module k

s battery racks

(a) One-hour backup power

Power conversion
system

Battery
rack 1
...
Battery
rack 2p

Battery
module 1

Battery
module 2

Battery
module 3

Battery
module k

...

Battery
module 1

Battery
module 2

Battery
module 3

Battery
module k

2s battery racks

(b) Two-hour backup power

Power conversion
system

Battery
rack 1
...
Battery
rack 4p

Battery
module 1

Battery
module 2

Battery
module 3

Battery
module k

...

Battery
module 1

Battery
module 2

Battery
module 3

Battery
module k

4s battery racks

(c) Four-hour backup power

FIG. 5

1/2s battery racks 20

FIG. 6(a) One-hour backup power

FIG. 6(b) Two-hour backup power

2s battery racks 20

FIG. 6(c) Four-hour backup power

## INTERNATIONAL SEARCH REPORT

| International application No. |
|---|
| **PCT/CN2021/092680** |

| A. | CLASSIFICATION OF SUBJECT MATTER |
|---|---|

H02J 7/00(2006.01)i

According to International Patent Classification (IPC) or to both national classification and IPC

| B. | FIELDS SEARCHED |
|---|---|

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

SIPOABS; DWPI; CNABS; CNTXT; CNKI; EPTXT; USTXT; WOTXT: 电池, 电能, 储能, 簇, 组, 电力, 串联, 供电, 切换, 电芯, 并联, 输出, 电压, 开关, battery, cell, accumulate, storage, serie, parallel, power, switch, voltage

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111431231 A (TSINGHUA UNIVERSITY) 17 July 2020 (2020-07-17) description, paragraphs [0043]-[0093], and figures 1 and 2 | 1-18 |
| A | CN 104604076 A (ROBERT BOSCH GMBH) 06 May 2015 (2015-05-06) entire document | 1-18 |
| A | CN 108377023 A (SHENZHEN CARKU TECHNOLOGY CO., LTD.) 07 August 2018 (2018-08-07) entire document | 1-18 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 December 2021** | **22 December 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/092680**

| Patent document cited in search report | | | Publication date (day/month/year) | Patent family member(s) | | | Publication date (day/month/year) |
|---|---|---|---|---|---|---|---|
| CN | 111431231 | A | 17 July 2020 | None | | | |
| CN | 104604076 | A | 06 May 2015 | WO | 2013185955 | A2 | 19 December 2013 |
| | | | | WO | 2013185955 | A3 | 08 May 2014 |
| | | | | EP | 2862255 | A2 | 22 April 2015 |
| | | | | DE | 102012209995 | A1 | 19 December 2013 |
| | | | | CN | 104604076 | B | 21 September 2018 |
| CN | 108377023 | A | 07 August 2018 | CN | 208369247 | U | 11 January 2019 |

Form PCT/ISA/210 (patent family annex) (January 2015)